# EUROPEAN PATENT SPECIFICATION

(11) **EP 2 727 395 B1**
(45) Date of publication and mention of the grant of the patent: **08.08.2018**
(21) Application number: 11868541.1
(22) Date of filing: 28.06.2011
(51) Int. Cl.: H04W 28/06, H04L 29/06, H04N 21/23, H04N 21/2662, H04W 4/18

(54) **LIVE VIDEO SHARING WITH MULTIMODAL MODES**
GEMEINSAME LIVE-VIDEONUTZUNG MIT MULTIMODALEN MODI
PARTAGE D'UNE VIDÉO EN DIRECT AVEC DES MODES MULTIMODAUX

(43) Date of publication of application: 07.05.2014
(73) Proprietor: Nokia Technologies Oy, 02610 Espoo (FI)
(72) Inventor: ZENG, Xiao, Beijing 100055 (CN); ZOU, Yanming, Beijing 100006 (CN); XIE, Xiaohui, Beijing 100012 (CN); WANG, Kongqiao, Beijing 100096 (CN)
(74) Representative: Anglesea, Christine Ruth
(86) International application number: PCT/CN2011/076521
(87) International publication number: WO 2013/000125

(56) References cited:
- CN-A- 101 548 523
- CN-A- 101 552 913
- US-A1- 2010 232 518
- TIECHENG LIU ET AL: "Real-time content analysis and adaptive transmission of lecture videos for mobile applications", PROCEEDINGS OF THE 12TH ANNUAL ACM INTERNATIONAL CONFERENCE ON MULTIMEDIA , MULTIMEDIA '04, 1 January 2004 (2004-01-01), page 400, XP055150574, New York, New York, USA DOI: 10.1145/1027527.1027622 ISBN: 978-1-58-113893-1
- SHIH-FU CHANG ET AL: "Real-time content-based adaptive streaming of sports videos", CONTENT-BASED ACCESS OF IMAGE AND VIDEO LIBRARIES, 2001. (CBAIVL 2001) . IEEE WORKSHOP ON KAUAI, HI, USA 14 DEC. 2001, LOS ALAMITOS, CA, USA,IEEE COMPUT. SOC, US, 1 January 2001 (2001-01-01), pages 139-146, XP010583718, DOI: 10.1109/IVL.2001.990868 ISBN: 978-0-7695-1354-6
- OZCELEBI T ET AL: "Optimal rate and input format controlfor content and context adaptive streaming of sports videos", MULTIMEDIA SIGNAL PROCESSING, 2004 IEEE 6TH WORKSHOP ON SIENA, ITALY SEPT. 29 - OCT. 1, 2004, PISCATAWAY, NJ, USA,IEEE, 29 September 2004 (2004-09-29), pages 502-505, XP010802198, DOI: 10.1109/MMSP.2004.1436605 ISBN: 978-0-7803-8578-8
- Anonymous: "Adaptive bitrate streaming - Wikipedia, the free encyclopedia", , 3 April 2011 (2011-04-03), XP055249934, Retrieved from the Internet: URL:https://en.wikipedia.org/w/index.php?t itle=Adaptive_bitrate_streaming&oldid=4221 53453 [retrieved on 2016-02-15]

## Description

### BACKGROUND

Service providers and device manufacturers (e.g., wireless, cellular, etc.) are continually challenged to deliver value and convenience to consumers by, for example, providing compelling network services. Thanks to the portability of mobile devices, more and more users prefer to capture their own video content by mobile device having high quality multimedia collectors such as cameras and microphones to record their daily lives. Mobile devices are also convenient for video reviewing thanks to their mobility. Video sharing is one of the hottest services in current social network services. It allows people to share their information or interesting things through videos. But, current mobile devices and network bandwidth limitations make it difficult for mobile users to enjoy video sharing to its fullest extent.

Tiecheng Liu et al.: "Real time content analysis and adaptive transmission of lecture videos for mobile applications" (Proceedings of the 12th Annual ACM International Conference on Multimedia, Multimedia, '04, 1 January 2004 (2004-01-01), page 400) discloses the analysis of real-time content and adaptive transmission of lecture videos from a server to a client. A server measures network bandwidth and computing capacity of a client, then transmits properly selected and compressed video key frames based on the request of the client.

Shih-Fu Chang et al.: "Real-time content-based adaptive streaming of sports videos" (Content-based access of image and video libraries, 2001. (CBAIVL 2001). IEEE Workshop on Kauai, HI, USA, 14 Dec 2001. Los Alamitos, CA, USA, IEEE Comput. Soc, US, 1 January 2001 (2001-01-01_, pages 139-146) discloses the adaptive streaming of sports videos. Full-motion audio-video content is displayed during important periods (e.g. pitching and follow-up plays in baseball) while during non-important periods, only key-frames, audio, and text are displayed.

### SUMMARY

Therefore, there is a need for an approach for enhancing a communication session.

The object of the invention can be achieved by an apparatus, a corresponding method, and a computer program product as defined in the independent claims. Further enhancements are specified in the dependent claims.

### BRIEF DESCRIPTION OF THE DRAWINGS

The embodiments of the invention are illustrated by way of example, and not by way of limitation, in the figures of the accompanying drawings:
FIG. 1 is a diagram of a system capable of enhancing a communication session, according to one embodiment;
FIG. 2 is a diagram of the components of a communication management platform, according to one embodiment;
FIG. 3 is a flowchart of a process for enhancing a communication session, according to one embodiment;
FIG. 4 is a diagram illustrating a video communication session that is sent to multiple receivers, according to one embodiment;
FIGs. 5A and 5B are diagrams illustrating a client/server related video communication session and a peer-to-peer related video communication session, according to various embodiments;
FIG. 6 is a diagram illustrating a video communication session that is shared by way or a social network, according to one embodiment;
FIG. 7 is a diagram of hardware that can be used to implement an embodiment of the invention;
FIG. 8 is a diagram of a chip set that can be used to implement an embodiment of the invention; and
FIG. 9 is a diagram of a mobile terminal (e.g., handset) that can be used to implement an embodiment of the invention.

### DESCRIPTION OF SOME EMBODIMENTS

Examples of a method, apparatus, and computer program for enhancing a communication session are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

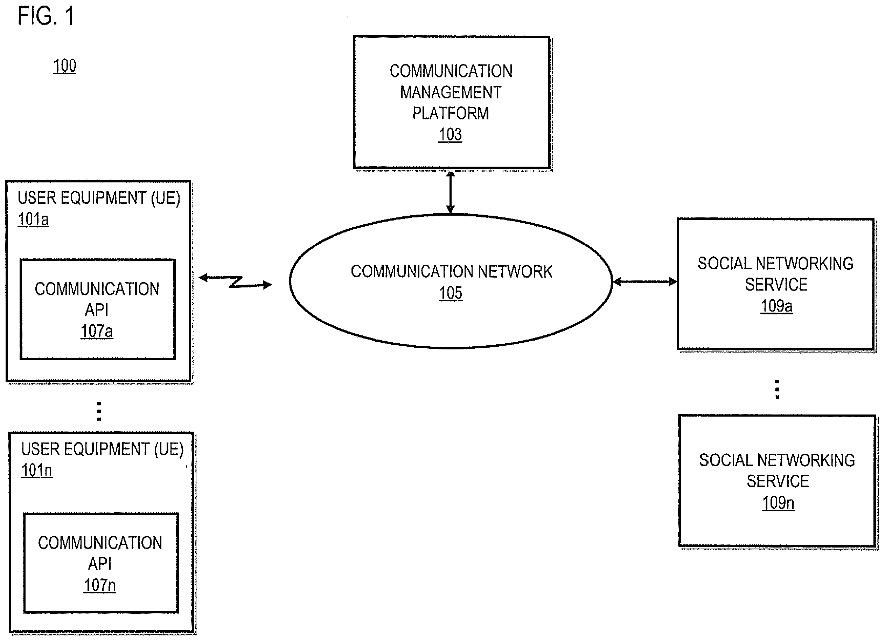

FIG. 1 is a diagram of a system capable of enhancing a communication session, according to one embodiment. Current mobile devices and network bandwidth limitations make it difficult for mobile users to enjoy live video sharing to its fullest extent.

Information sharing is an interest for many people. This is one reason of why social networking is so popular. Social networking services allow users share their daily experiences with friends and family members. Recently, live video sharing services have been developed and bring new user experiences.

Live video sharing creates a better user experience than video sharing that has an inherent delay such as those that require downloading at a time after the video is recorded. Live video sharing may be beneficial, for example, when a user is travelling, at a social event, or for a live meeting. Live sharing is useful, vivid, and interesting, and is a growing trend for social networking services. In other words, live sharing brings the most direct experience to users.

Video plays an important role in people's information sharing thanks to the fast improvement of mobile multimedia devices. However, sharing video data in a mobile environment is still a nontrivial task because if the limitations of mobile devices and network bandwidths.

As discussed above, though live sharing is desirable to users, many mobile users are unable to enjoy this service because of poor devices or networks. To boost this valuable service, these limitations should be minimized.

To address this problem, a system 100 of FIG. 1 introduces the capability to share and enjoy video contents in a real-time manner; and it provides for highly configurable and adaptive services to fit various sharing requirements and different mobile network bandwidths.

A live video sharing service with multimodal modes would provide a better user experience compared to most conventional video sharing services that are restricted by narrow network bandwidths or cannot be applied in live manner.

Live sharing provides an instant sharing experience with no temporal delay, which is an important feature for social networking users. Users need not store their captured video for sharing purposes. Further, viewers can also know what their friends are doing or going through at that moment. Live sharing may be totally mobile based, which may be achieved by multimodal modes. That is, all the end users can use mobile devices to enjoy a live video service. The users need not transmit or download the shared content to a PC. This feature may be achieved by multimodal selection that allows a user to adjust the sharing content to fit any processability and network bandwidth limitation of the user or the viewer which are major challenges for live video sharing services. Further, live video sharing is easy to share, and combines and abundant context provided by various mobile device sensors (like GPS) and video content analysis. The publication process may be fully automatic, manual, or any combination thereof. While live video sharing is beneficial, there are challenges as discussed above, that must be overcome to enable users to fully enjoy live video sharing services in spite of device limitations and network bandwidth limitations.

Video contains more information than image or audio files. But the data volume of video is also bigger than other media types. Video transmitting, therefore, is the most nontrivial task in mobile environment, and its success mostly depends on the resources of a mobile device and available network bandwidth. To save network bandwidth, key frames, video segments, rendering changes, and audio portions extracted from video, for example, can be transmitted instead of an original video to fit those users who do not require viewing the whole video or just are limited by very narrow bandwidth. This is the core concept of sharing within a multimodal mode service.

To construct such an unsymmetrical and configurable framework/UI is a challenge. Since sharing is live, key frames of video must be extracted when the publisher is shooting the video. In addition, this function may be executed on the publisher's mobile device or on the server, according to a different use case. Thereby the extraction method should be scalable. To improve a user's sharing experience, abundant context may be considered to make sharing process automatic using information provided by sensors on a mobile phone that may be utilized. Furthermore, multimedia content may also be explored to provide more information about the publisher capturing the video.

The system 100 allows users to share their live video content in multimodal manner, such as image, audio, video, etc. to save mobile resources and improve an overall user experience. The system 100 enables at least the following options for a communication session:
1). Original video with live sharing: When a user starts his video shooting, his friends can receive the synchronous content he is capturing by way of a live streaming video.
2). Multimodal options instead of the original video for publishing and receiving/viewing: Multimodal information includes options such as using a key frame mode, an audio mode, a hybrid mode of key frames and audio, a text mode, a key video segment mode, an avatar mode, and a video in scalable resolution mode. Both publisher and receiver can choose their preferred mode for sending and receiving content related to the video that is shot by the sender. The selectable modes may be advantageous to a publisher and/or a receiver of the video content because of a user preference, device limitation, or a limited bandwidth. For example, the viewer can select to just receive key frames of the video if his network bandwidth is low or below a threshold value. Each mode that the system 100 enables may be characterized as follows:
   a. Key frame mode: Key frames of the video being shot can be employed to represent the main content and save network bandwidth. Since key frame is very representative of video content, the viewer is able to spend less time for grasping the substance of video. Another advantage of key frame is that the viewer can gain a full view of the video at any time, which is different from a case when while watching a video, a user may miss something if the user doesn't keep looking at the screen.
   b. Audio mode: In a case when auditory content is more important than visual content, the visual content is not needed, and may be removed from the communication session to save the bandwidth, such as during a meeting or presentation.
   c. Text mode: This mode uses the least network bandwidth out of all of the modes. Text is automatically generated from two aspects: the information collected by sensors on a mobile device; and information explored from multimedia content, using techniques such as face recognition, voice recognition, event detection, and etc. In the text mode, receivers can obtain some live semantic information of the live video, such as location, human name, object name (like a building, animal, car, etc.).
   d. Key video segment mode: Key video segments are 1 or 2 second video clips along with continuous audio. The key video segment mode may save available bandwidth, such that unimportant scenes are automatically detected and not transmitted. Once an interesting/typical scene or event is detected, the current video segment is considered as a key segment and transmitted.
   e. Avatar mode: Avatar mode is a mode that covers both visual and auditory content and also requires much less bandwidth than transferring an entire video. In avatar mode, the people or object being captured are transformed to a cartoon profile and displayed to the viewer while audio is transmitted. The visual information in this mode is successive, in contrast to the key-frame mode. In this mode, only feature points of the captured object need be transferred, and the amount of required bandwidth is reduced. Besides the economy, avatar mode is also very interesting. For example, users can interact with the cartoon profile through gesture or some other multimodal input. Avatar mode is further divided into several categories, which are suitable for different situations:
      1) Decorations: When the video is almost about a human face, for communication or some other purpose, the viewer can add some virtual decorations to the face on the screen.
      2) Pure virtual face: Besides decorations, the viewer is also able to see a virtual face on the screen instead. In this mode, when an expression on the face changes, a virtual profile may be altered to correspond with the change in a synchronous manner.
      3) Virtual face & actual background: If a face is not the only content viewers may observe, the virtual face can be combined with actual background in the video. Considering a possible network overload and available visual information, the background may stay relatively still and only changes when the background is distinctly different. This is like the key frame detection, but for the background of the image.
      4) Entire virtualization: There is another option for the viewers that they can view a virtualization of the real video. Simple shapes and colors are used to reconstruct the content of video. In this case, the video on the viewer side looks like a cartoon.
   f. Hybrid mode: A hybrid combination of any of the above mentioned modes, which is still a reduction of bandwidth usage from an original video stream.
   g. Video of scalable resolution mode: If the network bandwidth is sufficient, users can transfer the entire video stream. However, in video mode, the system 100 also provides different resolution to receivers in different network conditions to accommodate limited available bandwidths.

Real-time information may also be extracted during the publisher's shooting of a video. To achieve the multimodal live sharing discussed above, it is a challenge as to how to extract valuable information from the video while shooting. For different modes, there are several strategies:
a. Live key frame extraction is different from almost all the existing methods which only applied to recorded video files. With the shooting occurring, new key frames are generated and transferred to the viewers. Due to the lack of entire video information, the key frames only can be extracted according to previous frames, audio, and etc. Scene change is an important indicator that a new key frame is needed; and when a person is shooting and sharing his video, human voice is also a valuable context for key frame extraction. However, publisher's manual key frame generation command is also supported in our service.
b. Live audio extraction can be accomplished by separating the microphone input. An additional optional may be available in which is it determined that only a human voice is meaningful, like in a meeting. After such a detection the system 100 detects a human voice for transferring and filters out a silence and noise audio segment of the audio portion of the transmission. This modification of the original audio stream could improve a reviewing user's experience.

Choice of location for information extraction and video resolution changes between different sides of the video transmission for different cases. This depends primarily on a publisher's selection. For example, if the publisher chooses a video mode for sharing, all the process tasks can be applied on a server side to save a calculation resource and bandwidth of the publisher. But, if the publisher chooses other multimodal modes for sharing, corresponding calculations have to be taken on his own device, in which case the complexity of any calculation algorithm needs be reduced to fit the end device.

Context collection and analysis is also integrated into our service. This information is utilized to enrich the sharing experience. The following types of context may be considered:
a. Sensor data: Currently, many mobile devices carry various sensors to collect data of GPS, gravity sensor, and compass. This data is easy to get and useful to make the sharing more understandable. In addition, any automatically collected data can be used to generate a simple title or description of the shared content, which can release publishers from adding that information manually.
b. Multimedia content based exploring: This type of context is higher level and is helpful in improving a user's experience. Many multimedia analysis technologies can be introduced into the service for automatic tagging the captured content. For example, face recognition and voice recognition may be helpful for distinguishing the people involved in the shared content; and the server can push this information to receivers to achieve annotation of the sharing.

Besides live sharing, the contents that are shared may be stored on a server side. Users can access those contents that are stored anytime, anywhere. Even when the contents are stored, the multimodal modes may also be supported.

As shown in FIG. 1, the system 100 comprises user equipment (UE) 101a-101n (discussed collectively as UE 101) having connectivity to a communication management platform 103 and social networking services 109a-109n (collectively referred to as social networking service 109) via a communication network 105. UE 101a-101n are the end devices for publishing and receiving communication content, whereas communication management platform 103 provides multimodal services to enhance a communication session between any of the UE 101.

The UE 101 may incorporate a camera that is either part of the UE 101 or external and may be used as a publishing device. The UE 101 may have a communication API 107a-107n (collectively referred to as communication API 107) for sharing, publishing and/or receiving video content. Captured content is optionally uploaded to the communication management platform 103, which means that the publisher can choose the actual content for publishing, according to his desire or network condition. UE 101 is also able to act as a receiver, with which a user can view other user's videos. Different users may choose different modes during a sharing of video content. The communication management platform 103 may manage several services that are deployed on the server side to support data transmission, storage, analysis, and processing. Any complex computing may executed on the communication management platform 103, which will result in any processed data to be sent to the UE 101. However, the UE 101 may process all of the computing onboard the device and need to require the communication management platform 103 so long as the UE 101 is capable of processing such computations.

In one embodiment, a user of UE 101 may share a live video of a scene around him as a publisher with a user of another UE 101 as a receiver. The publisher may use the communication API 107 to manage the video sharing. The video sharing may be managed through the communication management platform 103 which may process a selection of video sharing modes, or it may automatically change or suggest a change in sharing modes. Such change may be from a live video stream to a key frame mode, or any of the other modes discussed above, among other modes that may become available.

In another embodiment, a user of UE 101 may share a live video of a scene around him as a publisher with a user of another UE 101 as a receiver. The publisher may use the communication API 107 to manage the video sharing. The video sharing may be directly shared as a peer-to-peer experience without interacting with an external communication management platform, but rather, because the communication management platform 103 may also be on board the UE 101 to process a selection of video sharing modes, or it may automatically change or suggest a change in sharing modes. Such change may be from a live video stream to a key frame mode, or any of the other modes discussed above, among other modes that may become available.

In another embodiment, a user of UE 101 may share a live video of a scene around him as a publisher with a user of another UE 101 as a receiver, or may share the video, key frames, or any other result of the modes directly with a social networking service 109. The publisher may use the communication API 107 to manage the video sharing. The video sharing may be directly shared as peer-to-peer without interacting with an external communication management platform, but rather, because the communication management platform 103 may also be onboard the UE 101, or through a communication management platform 103 to process a selection of video sharing modes, or it may automatically change or suggest a change in sharing modes. Such change may be from a live video stream to a key frame mode, or any of the other modes discussed above, among other modes that may become available. The social networking service 109 may automatically or selectively store the communication content for viewing by the publisher, the receiver, or any other contacts that the publisher may want to view the stored communication content.

By way of example, the UE 101, communication management platform 103 and social networking service 109 communicate with each other and other components of the communication network 105 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

By way of example, the communication network 105 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), and the like, or any combination thereof.

The UE 101 is any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, including the accessories and peripherals of these devices, or any combination thereof. It is also contemplated that the UE 101 can support any type of interface to the user (such as "wearable" circuitry, etc.).

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

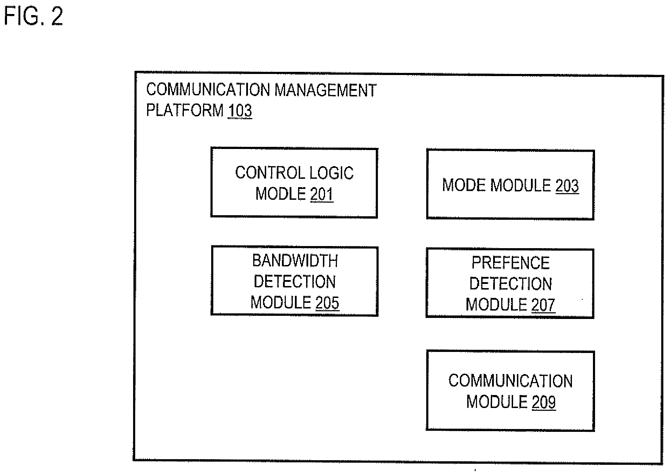

FIG. 2 is a diagram of the components of communication management platform 103, according to one embodiment. By way of example, the communication management platform 103 includes one or more components for providing enhancing a communication session. It is contemplated that the functions of these components may be combined in one or more components or performed by other components of equivalent functionality. In this embodiment, the communication management platform 103 includes a control logic module 201, a mode module 203, a bandwidth detection module 205, a preference detection module 207 and a communication module 209. The communication management platform 103 receives an indication that a video session is occurring by way of communication module 209. The control logic module 201 manages the interaction between the mode module 203, bandwidth detection module 205 and preference detection module 207. The mode module 203 determines a best mode for enhancing the video communication session out of the multimodes discussed above, as well as any new modes that may be developed and incorporated into the choices available for the communication management platform 103. The determination for the best mode may be based on an available bandwidth that is detected by the bandwidth detection module 205, or a device limitation such as support for a particular mode, or a memory constraint that is determined by the mode module 203. Each of the available modes may have a predetermined threshold value for the bandwidth that makes a particular mode more ideal than another. For example, a video mode or audio mode will need more bandwidth than a text mode. So, based on the available bandwidth determination, the mode module may automatically change the mode for the video transmission and/or reception to make the communication session better for the publisher and the receiver, Alternatively, the mode module may just cause the communication management platform 103 to suggest a best mode, or a list of available modes based on modes known to the system and/or the available bandwidth to the publisher or receiver of the video communication by way of the communication module 209. The preference detection module 207 detects whether the publisher or the receiver of the video communication has any preferences for a preferred transmission mode, or a selection of a specific more for an instant video communication session to be transmitted.

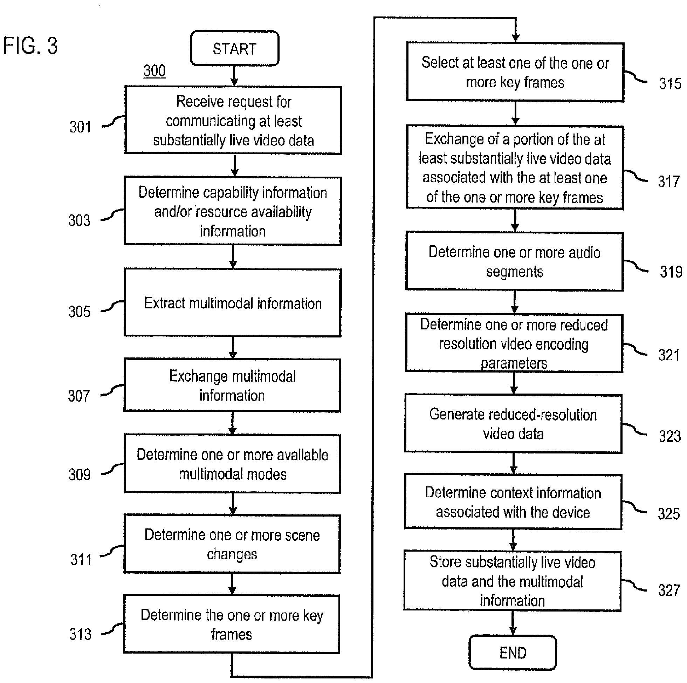

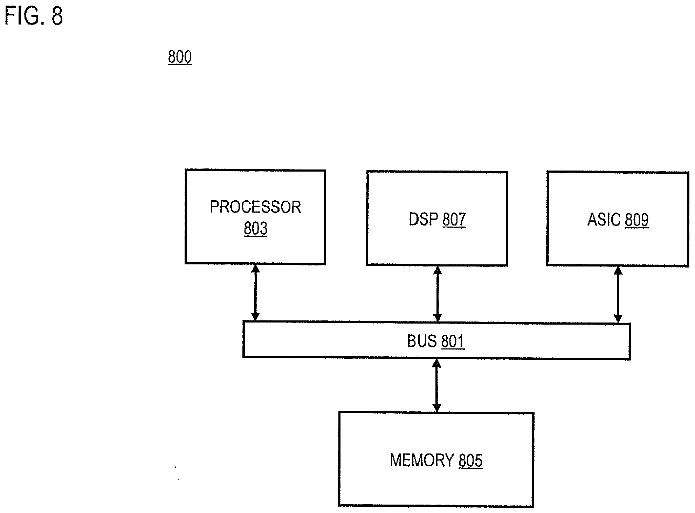

FIG. 3 is a flowchart of a process for enhancing a communication session, according to one embodiment. In one embodiment, the communication management platform performs the process 300 and is implemented in, for instance, a chip set including a processor and a memory as shown in FIG. 8. In step 301 the communication management platform 103 receives a request for communicating at least substantially live video data between a UE 101a and one or more other UE 101n's. Next, in step 303, the communication management platform 103 determines capability information, resource availability information, or a combination thereof of the UE 101 and/or the other UE 101n. The process continues to step 305 in which the communication management platform 103 processes the capability information, the resource availability information, or a combination thereof to cause, at least in part, an extraction of multimodal information from the at least substantially live video data. The multimodal information being any of the modes discussed above such as a key frame mode, an audio mode, a reduced-resolution mode, a speech-to-text mode, an animated mode, etc., or any combination thereof. Next, in step 307, the communication management platform 103 causes, at least in part, an exchange of the multimodal information in place of at least a portion of the at least substantially lie video data in response to the request.

The process continues to step 309 in which the communication management platform 103 processes the capability information and/or the resource availability information to determine one or more available multimodal modes. The extraction of the multimodal information is based, at least in part, on the one or more available multimodal modes. Next, in step 311, the communication management platform 103 determines one or more scene changes in a previously recorded portion of the at least substantially live video data. Then, in step 313, the communication management platform 103 determines one or more key frames based, at least in part, on the one or more scene changes.

The process continues to step 315 in which the communication management platform 103 receives an input for selecting at least one of the one or more key frames. The input may be an indication that a key frame should be automatically selected and sent from one device to another, or a user directed selection that a key frame should be sent from one device to another. Next, in step 317, the communication management platform 103 causes, at least in part, an exchange of a portion of the at least substantially live video data associated with the at least one of the one or more key frames. Then, in step 319, the communication management platform 103 processes the previously recorded portion the at least substantially live video data and/or concurrently recorded audio data to determine one or more audio segments based, at least in part, on one or more audio selection criteria. The audio data may have at least in part the one or more audio segments. The process continues to step 321 in which the communication management platform 103 processes the capability information and/or the resource availability information to determine one or more reduced resolution video encoding parameters. Then, in step 323, the communication management platform 103 causes, at least in part, a generation of the reduced-resolution video data based, at least in part, on the one or more reduced resolution video encoding parameters.

Next, in step 325, the communication management platform 103 determines context information associated with the device, the one or more other devices, the at least substantially live video data, or a combination thereof. The multimodal information includes, at least in part, the context information. Then, in step 327, to aid in speeding up any of the other steps or processes of the process, the communication management platform 103 causes a storage of the at least substantially live video data and the multimodal information for subsequent access.

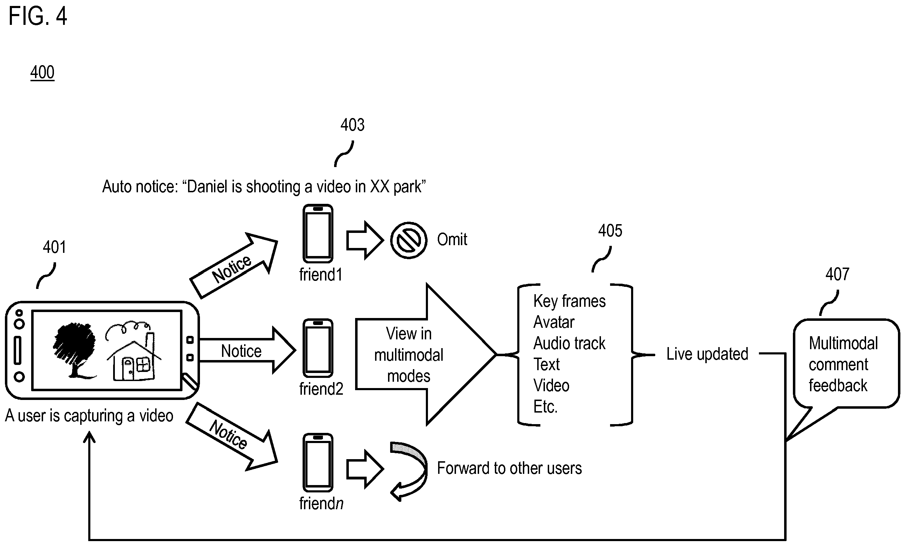

FIG. 4 is a flowchart illustrating a live video sharing, session within multimodal modes, a typical sharing process, according to one embodiment. In this embodiment, a user is capturing video at 401, his friends 1-n may receive an automatically generated message at 403, which may include information about who is publishing the video content, where the video content is being shot (location from GPS), what the video content is (content explored by automatic analysis, like face detection). When one of the publisher's friends receives the message about the video sharing at 403, the receiver can choose to dive into the details, forward it or just omit it. When a receiver dives into his friend's capturing content, he can choose at 405 between the different modes discussed above according to his interest or bandwidth limitations, such as image mode (key frames), audio mode (suitable for speech video and etc.), text mode, avatar mode, hybrid mode, video mode, etc. which are live and may be dynamically updated while the video content is collected. For example, if a bandwidth condition changes, the mode made me changed automatically or a suggestion may be made to change modes by the communication management platform 103 to keep the live communication session going. For example, if a user selects "video mode" when he is in WIFI network; with his movement, WIFI signal becomes unavailable; to keep the sharing ongoing, system changes his mode to "key-frame mode" automatically, Also, if image mode is selected, for example, each key frame may be generated and transferred together with current context (from sensors' data or content analysis). A viewer also may provide live comments to other users including the publisher and other receivers. The publisher may then adjust his capturing of the video according to the instant feedback that is provided.

Several algorithms are involved in this service, mainly involving instant key frame extraction, human voice detection and recognition, human face recognition, etc. These algorithms are usually executed on an external communication management platform 103 as discussed above to simplify the calculation on user's mobile phone. But if the publisher doesn't share an entire video, or the UE 101 is capable of processing the algorithm without consulting an external communication management platform, the corresponding algorithm maybe executed on the UE 101.

For audio extraction, the simplest mode that users can choose is just to transfer the audio data captured by the publisher's microphone. Or users can select another mode which filters out silent and meaningless noise segment to save bandwidth. In this mode, the most important audio segments are those which contain human voice; in addition, some audio events are also considered meaningful, such as wedding march, birthday song, yelp, etc.

For key frame extraction, there are three conditions that may trigger new key frame generation and transferring.
a. Significant visual content change. Since key frame is representative frame that could present the main content of a video segment/scene, it may be necessary to detect the segment/scene change and choose one or more frames to transfer. The key frames should be selected in a limited context. That is, when it is decided whether a frame is or not a key frame, the visual information of posterior frames cannot be used because they are not captured yet. Motion is an essential and important feature of videos, which can be utilized to distinguish the change of visual content. When motion of large amplitude is detected, a key frame can be output by further examine whether current visual content is obvious different from that before the motion. However, the frames output just after a meaningful motion may not be very representative, though it is transferred to the reviewer. With the shooting going on, continuous examination is executed and the old key frame can be updated once a better frame is found. The key frame on the receiver's side can be optimized using such a method.
b. Audio event. Besides pure visual content analysis, key frames also can be generated by audio information. When a user is publishing his video content, he may say something to annotate the scene. This is a good indicator that points out meaningful content in his opinion. So frames at the position where human voice is detected is usually important in live sharing. Furthermore, other audio events can be detected as those discussed above and can also be employed as a trigger in key frame extraction. c. Manual command by the publisher. Automatic key frame extraction method may not be exactly accord with the results selected by people. In traditional key frame extraction method, users have a difficult time with the extracting process. But in the system 100, the publisher can easily choose the frame that he considers being important. The publisher can select a feature on UE 101 to indicate a key frame as his demand; and the result will be shared in time.

For context integration, some additional options may be made available such as route/ map information, people involved with one another, recommendations for places to go and things to do, etc. Examples of context that may be considered are as follows:
a. Sensor data. To extract such context data is relatively easy. The corresponding API can be recalled to obtain the data. However, the original data may need be translated to another form for easy understanding. For example, GPS data of longitude and latitude is not very meaningful for the end users. So a location service should be queried to translate the coordinates to a comprehendible location name.
b. Multimedia content analysis results. Several methods can be used to enrich the context data. Facial recognition and voice recognition can be used to detect the human appearing in the video. This information is more useful when the face and voice are benchmarked in the service. For example, if one person's face and name are manually related to video sharing that is managed by the communication API 107 or communication management platform 103 his name can be automatically tagged onto the sharing frames once the person appears in the video.

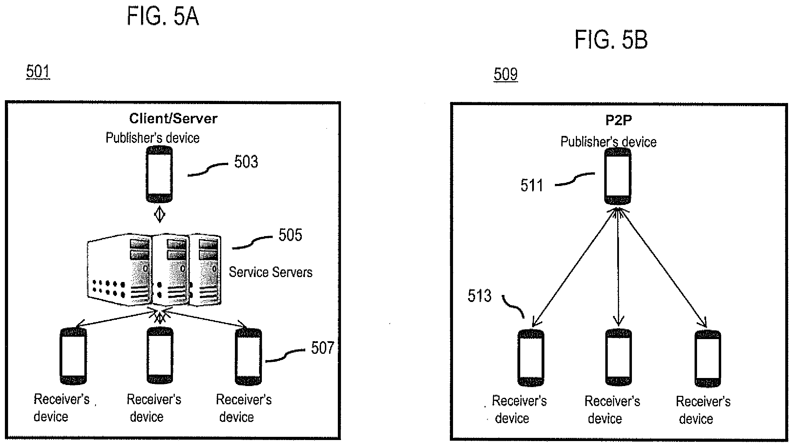

FIGs. 5A and 5B illustrate example variations of the hierarchy of flow of video content. FIG. 5A illustrates a client/server relationship 501 in which a publisher's device 503 is used for publishing a communication session like a video transmission to receiver devices 507 by way of a server system 505. The server 505 may manage the communication session, as discussed above with regard to communication management platform 103.

FIG. 5B illustrates a peer-to-peer relationship 509 in which a publisher's device 511 directly publishes a communication session like a video transmission to receiver devices 513. In this embodiment, any communication management is handled by the devices 511 and 513, as discussed above.

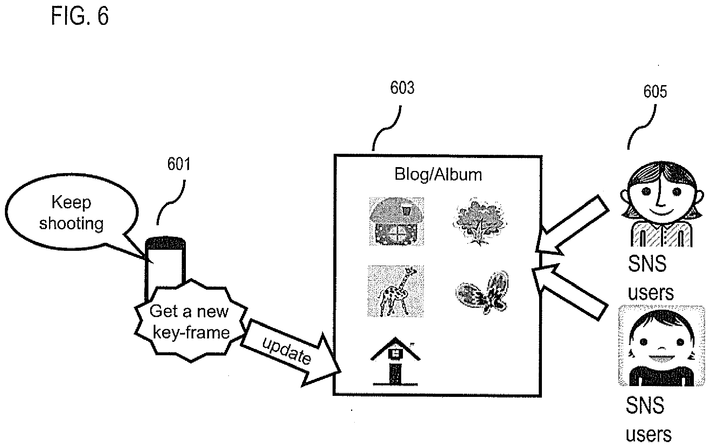

FIG. 6 is an illustration of a video communication session in which the video is shared on a social networking service so that other users may view the communication session. A user of device 601 may initiate a video communication session, that may be managed and altered to be in accordance with any of the modes discussed above. The video communication session may be shared with receivers at other devices, and/or shared by way of a social networking service 603 so that other users 605, that are not receivers having compatible devices, may view the content that is being transmitted by the user of device 601 either live, or at a later time.

The processes described herein for enhancing a communication session may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

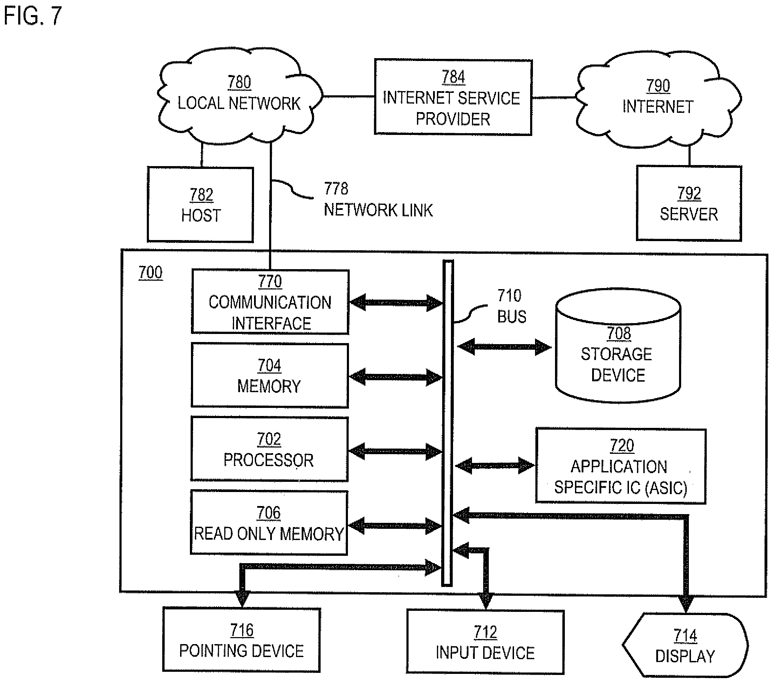

FIG. 7 illustrates a computer system 700 upon which an embodiment of the invention may be implemented. Although computer system 700 is depicted with respect to a particular device or equipment, it is contemplated that other devices or equipment (e.g., network elements, servers, etc.) within FIG. 7 can deploy the illustrated hardware and components of system 700. Computer system 700 is programmed (e.g., via computer program code or instructions) to enhance a communication session as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, subatomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 700, or a portion thereof, constitutes a means for performing one or more steps of enhancing a communication session.

A bus 710 includes one or more parallel conductors of information so that information is transferred quickly among devices coupled to the bus 710. One or more processors 702 for processing information are coupled with the bus 710.

A processor (or multiple processors) 702 performs a set of operations on information as specified by computer program code related to enhance a communication session. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation -codes, constitute processor instructions, also called computer system instructions or, simply, computer instructions. Processors may be implemented as mechanical, electrical, magnetic, optical, chemical or quantum components, among others, alone or in combination.

Computer system 700 also includes a memory 704 coupled to bus 710. The memory 704, such as a random access memory (RAM) or any other dynamic storage device, stores information including processor instructions for enhancing a communication session. Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or any other static storage device coupled to the bus 710 for storing static information, including instructions, that is not changed by the computer system 700. Some memory is composed of volatile storage that loses the information stored thereon when power is lost. Also coupled to bus 710 is a non-volatile (persistent) storage device 708, such as a magnetic disk, optical disk or flash card, for storing information, including instructions, that persists even when the computer system 700 is turned off or otherwise loses power.

Information, including instructions for enhancing a communication session, is provided to the bus 710 for use by the processor from an external input device 712, such as a keyboard containing alphanumeric keys operated by a human user, a microphone, an Infrared (IR) remote control, a joystick, a game pad, a stylus pen, a touch screen, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT), a liquid crystal display (LCD), a light emitting diode (LED) display, an organic LED (OLED) display, a plasma screen, or a printer for presenting text or images, and a pointing device 716, such as a mouse, a trackball, cursor direction keys, or a motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of ASICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners and external disks. In general the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic or electromagnetic signals, including infrared and optical signals, that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network 105 for enhancing a communication session to the UE 101.

The term "computer-readable medium" as used herein refers to any medium that participates in providing information to processor 702, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 708. Volatile media include, for example, dynamic memory 704. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 720.

Network link 778 typically provides information communication using transmission media through one or more networks to other devices that use or process the information. For example, network link 778 may provide a connection through local network 780 to a host computer 782 or to equipment 784 operated by an Internet Service Provider (ISP). ISP equipment 784 in turn provides data communication services through the public, world-wide packet-switching communication network of networks now commonly referred to as the Internet 790.

A computer called a server host 792 connected to the Internet hosts a process that provides a service in response to information received over the Internet. For example, server host 792 hosts a process that provides information representing video data for presentation at display 714. It is contemplated that the components of system 700 can be deployed in various configurations within other computer systems, e.g., host 782 and server 792.

At least some embodiments of the invention are related to the use of computer system 700 for implementing some or all of the techniques described herein. According to one embodiment of the invention, those techniques are performed by computer system 700 in response to processor 702 executing one or more sequences of one or more processor instructions contained in memory 704. Such instructions, also called computer instructions, software and program code, may be read into memory 704 from another computer-readable medium such as storage device 708 or network link 778. Execution of the sequences of instructions contained in memory 704 causes processor 702 to perform one or more of the method steps described herein. In alternative embodiments, hardware, such as ASIC 720, may be used in place of or in combination with software to implement the invention. Thus, embodiments of the invention are not limited to any specific combination of hardware and software, unless otherwise explicitly stated herein.

The signals transmitted over network link 778 and other networks through communications interface 770, carry information to and from computer system 700. Computer system 700 can send and receive information, including program code, through the networks 780, 790 among others, through network link 778 and communications interface 770. In an example using the Internet 790, a server host 792 transmits program code for a particular application, requested by a message sent from computer 700, through Internet 790, ISP equipment 784, local network 780 and communications interface 770. The received code may be executed by processor 702 as it is received, or may be stored in memory 704 or in storage device 708 or any other non-volatile storage for later execution, or both. In this manner, computer system 700 may obtain application program code in the form of signals on a carrier wave.

Various forms of computer readable media may be involved in carrying one or more sequence of instructions or data or both to processor 702 for execution. For example, instructions and data may initially be carried on a magnetic disk of a remote computer such as host 782. The remote computer loads the instructions and data into its dynamic memory and sends the instructions and data over a telephone line using a modem. A modem local to the computer system 700 receives the instructions and data on a telephone line and uses an infra-red transmitter to convert the instructions and data to a signal on an infra-red carrier wave serving as the network link 778. An infrared detector serving as communications interface 770 receives the instructions and data carried in the infrared signal and places information representing the instructions and data onto bus 710. Bus 710 carries the information to memory 704 from which processor 702 retrieves and executes the instructions using some of the data sent with the instructions. The instructions and data received in memory 704 may optionally be stored on storage device 708, either before or after execution by the processor 702.

FIG. 8 illustrates a chip set or chip 800 upon which an embodiment of the invention may be implemented. Chip set 800 is programmed to enhance a communication session as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 800 can be implemented in a single chip. It is further contemplated that in certain embodiments the chip set or chip 800 can be implemented as a single "system on a chip." It is further contemplated that in certain embodiments a separate ASIC would not be used, for example, and that all relevant functions as disclosed herein would be performed by a processor or processors. Chip set or chip 800, or a portion thereof, constitutes a means for performing one or more steps of providing user interface navigation information associated with the availability of functions. Chip set or chip 800, or a portion thereof, constitutes a means for performing one or more steps of enhancing a communication session.

In one embodiment, the chip set or chip 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a more general purpose processor. Other specialized components to aid in performing the inventive functions described herein may include one or more field programmable gate arrays (FPGA), one or more controllers, or one or more other special-purpose computer chips.

In one embodiment, the chip set or chip 800 includes merely one or more processors and some software and/or firmware supporting and/or relating to and/or for the one or more processors.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to enhance a communication session. The memory 805 also stores the data associated with or generated by the execution of the inventive steps.

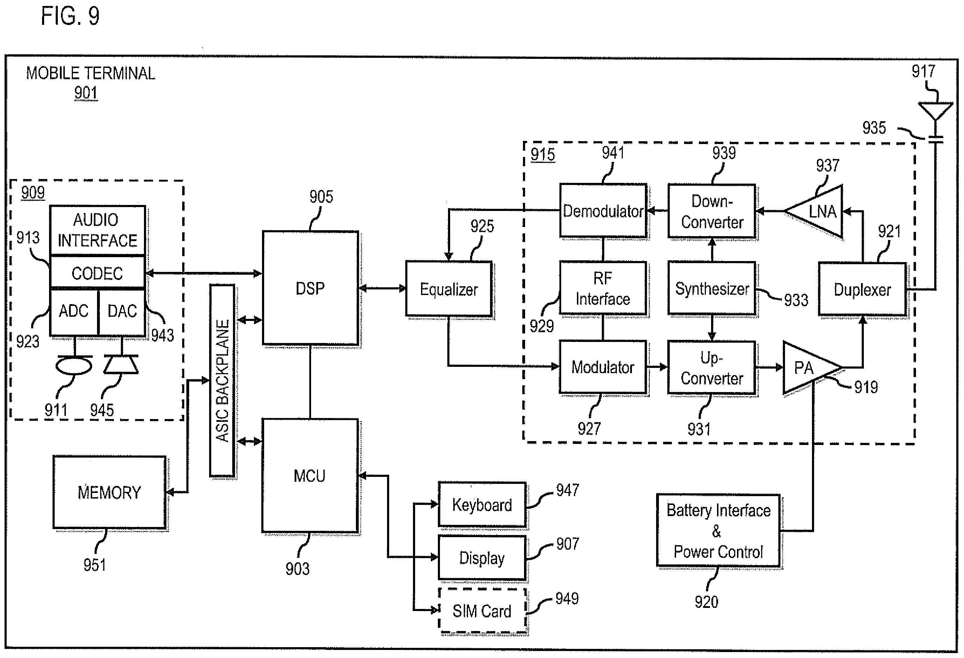

FIG. 9 is a diagram of exemplary components of a mobile terminal (e.g., handset) for communications, which is capable of operating in the system of FIG. 1, according to one embodiment. In some embodiments, mobile terminal 901, or a portion thereof, constitutes a means for performing one or more steps of enhancing a communication session. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile terminal functions that perform or support the steps of enhancing a communication session. The display 907 includes display circuitry configured to display at least a portion of a user interface of the mobile terminal (e.g., mobile telephone). Additionally, the display 907 and display circuitry are configured to facilitate user control of at least some functions of the mobile terminal. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile terminal 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903 which can be implemented as a Central Processing Unit (CPU).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile terminal 901 to enhance a communication session. The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the terminal. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile terminal 901.

The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable storage medium known in the art. The memory device 951 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 949 carries, for instance, important information, such as the cellular phone number, the carrier supplying service, subscription details, and security information. The SIM card 949 serves primarily to identify the mobile terminal 901 on a radio network. The card 949 also contains a memory for storing a personal telephone number registry, text messages, and user specific mobile terminal settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. An apparatus (800) comprising:
means for receiving (301) a request for communicating live video data between a device (503) and one or more other devices (507), wherein the video data comprises audio information;
means for determining (303) capability information, resource availability information, or a combination thereof of the device, the one or more other devices, or a combination thereof;
means for processing (305) the capability information, the resource availability information, or a combination thereof to determine one or more first available multimodal modes, corresponding to one or more multimodal modes in the group comprising: a key frame mode; an audio mode; a hybrid mode of key frames and audio; a speech-to-text mode; a key video segment mode; an avatar mode wherein in the avatar mode captured people or objects are transformed to a cartoon profile, and to extract multimodal information associated with the one or more first available multimodal modes from the live video data;
means for causing, at least in part, an exchange (307) of the multimodal information in place of at least a portion of the live video data associated with the multimodal information in response to the request, in a communication session; and
means for determining one or more second available multimodal modes corresponding to one or more multimodal modes in the group, different from at least one of the one or more first available multimodal modes, and for extraction and exchange of second multimodal information associated with the one or more second available multimodal modes, in dependence on changed capability information, resource availability information, or a combination thereof of the device, the one or more other devices, or a combination thereof, during the communication session.

2. An apparatus according to claim 1, wherein the multimodal information includes, at least in part, one or more key frames, audio data, reduced-resolution video data, speech-to-text data, or a combination thereof associated with the one or more first available multimodal modes.

3. An apparatus of claim 2, wherein the apparatus further comprises means for processing (313) a previously recorded portion of the live video data to determine the one or more key frames.

4. An apparatus of claim 3, wherein the apparatus further comprises:
means for determining (311) one or more scene changes in the previously recorded portion of the live video data; and
means for determining the one or more key frames based, at least in part, on the one or more scene changes.

5. An apparatus according to any of claims 2-4, wherein the apparatus further comprises:
means for receiving (315) an input for selecting at least one of the one or more key frames; and
means for causing (317), at least in part, an exchange of a portion of the live video data associated with the at least one of the one or more key frames.

6. An apparatus according to any of claims 2-5, wherein the apparatus further comprises:
means for processing (319) the previously recorded portion of the live video data, concurrently recorded audio data, or a combination thereof to determine one or more audio segments based, at least in part, on one or more audio selection criteria,
wherein the audio data comprises at least in part the one or more audio segments.

7. An apparatus according to claim 1, wherein the apparatus further comprises means for extracting the multimodal information while the live video data is being shot in response to the request for communicating the live video data.

8. An apparatus according to claim 1, wherein the apparatus is a mobile phone further comprising:
means for facilitating user control of at least some functions of the mobile phone through use of a display and configured to respond to user input; and
means for displaying at least a portion of a user interface of the mobile phone, the display and display circuitry configured to facilitate user control of at least some functions of the mobile phone.

9. A method comprising:
receiving (301) a request for communicating live video data between a device (503) and one or more other devices (507), wherein the video data comprises audio information;
determining (303) capability information, resource availability information, or a combination thereof of the device, the one or more other devices, or a combination thereof;
processing (305) the capability information, the resource availability information, or a combination thereof to determine one or more first available multimodal modes, corresponding to one or more multimodal modes in the group comprising: a key frame mode; an audio mode; a hybrid mode of key frames and audio; a text mode; a key video segment mode; an avatar mode, wherein in the avatar mode captured people or objects are transformed to a cartoon profile, and to extract multimodal information associated with the one or more first available multimodal modes from the live video data; and
causing, at least in part, an exchange (307) of the multimodal information in place of at least a portion of the live video data associated with the multimodal information in response to the request, in a communication session; and
determining one or more second available multimodal modes corresponding to one or more multimodal modes in the group, different from at least one of the one or more first available multimodal modes, for extraction and exchange of second multimodal information associated with the one or more second available multimodal modes, in dependence on changed capability information, resource availability information, or a combination thereof of the device, the one or more other devices, or a combination thereof, during the communication session.

10. A method according to claim 9, wherein the multimodal information includes, at least in part, one or more key frames, audio data, reduced-resolution video data, speech-to-text data, or a combination thereof.

11. A method of claim 10, further comprising:
processing (313) a previously recorded portion of the live video data to determine the one or more key frames.

12. A method according to any of claims 10-11, further comprising:
receiving (315) an input for selecting at least one of the one or more key frames; and
causing (317), at least in part, an exchange of a portion of the live video data associated with the at least one of the one or more key frames.

13. A method according to any of claims 10-12, further comprising:
processing (319) the previously recorded portion of the live video data, concurrently recorded audio data, or a combination thereof to determine one or more audio segments based, at least in part, on one or more audio selection criteria,
wherein the audio data comprises at least in part the one or more audio segments.

14. A computer program product including one or more sequences of one or more instructions which, when executed by one or more processors (803), cause an apparatus to at least perform the steps of a method of any of claims 9-13.

## Patentansprüche

1. Eine Vorrichtung (800), Folgendes umfassend:
Mittel für den Empfang (301) einer Anforderung zur Übermittlung von Live-Videodaten zwischen einem Gerät (503) und einem oder mehreren anderen Geräten (507), wobei die Videodaten Audio-Informationen umfassen;
Mittel zum Bestimmen (303) von Fähigkeitsinformationen, Ressourcenverfügbarkeitsinformationen oder einer Kombination daraus für das Gerät, für das eine oder die mehreren anderen Geräte oder für eine Kombination daraus;
Mittel zum Verarbeiten (305) der Fähigkeitsinformationen, der Ressourcenverfügbarkeitsinformationen oder einer Kombination daraus zur Bestimmung einer oder mehrerer erster verfügbarer multimodaler Betriebsarten, die einer oder mehreren multimodalen Betriebsarten in der Gruppe entsprechen, Folgendes umfassend: einen Einzelbildmodus; einen Audiomodus; einen Hybridmodus von Einzelbildrahmen und Audio; einen Sprache-zu-Text-Modus; einen Key-Video-Segmentmodus; einen Avatar-Modus, wobei die im Avatar-Modus aufgenommenen Personen oder Objekte in ein Cartoon-Profil transformiert werden; und Extrahieren multimodaler Informationen, die mit der einen oder den mehreren ersten verfügbaren multimodalen Betriebsarten verbunden sind, aus den Live-Videodaten;
Mittel zum Veranlassen eines wenigstens teilweisen Austauschs (307) der vorhandenen multimodalen Informationen von wenigstens einem Teil der Live-Videodaten, die mit den multimodalen Informationen verbunden sind, in Reaktion auf die Anforderung in einer Kommunikationssitzung; und
Mittel zum Bestimmen einer oder mehrerer zweiter verfügbarer multimodaler Betriebsarten, die einer oder mehreren multimodalen Betriebsarten in der Gruppe entsprechen, die sich wenigstens von einem der einen oder der mehreren ersten verfügbaren multimodalen Betriebsarten unterscheiden, und Extrahieren und Austauschen von zweiten multimodalen Informationen, die mit der einen oder den mehreren zweiten verfügbaren multimodalen Betriebsarten verbunden sind, in Abhängigkeit der ausgetauschten Fähigkeitsinformationen, Ressourcenverfügbarkeitsinformationen oder einer Kombination daraus für das Gerät, das eine oder die mehreren anderen Geräte oder einer Kombination daraus während der Kommunikationssitzung.

2. Vorrichtung gemäß Anspruch 1, wobei die multimodalen Informationen wenigstens teilweise einen oder mehrere Einzelbildrahmen, Audiodaten, niedrigauflösende Videodaten, Sprache-zu-Text-Daten oder eine Kombination daraus enthalten, die mit der einen oder den mehreren ersten multimodalen Betriebsarten verbunden sind.

3. Vorrichtung gemäß Anspruch 2, wobei die Vorrichtung ferner Mittel zum Verarbeiten (313) eines vorher aufgezeichneten Anteils der Live-Videodaten zum Bestimmen des einen oder der mehreren Einzelbildrahmen umfasst.

4. Vorrichtung gemäß Anspruch 3, wobei die Vorrichtung ferner umfasst:
Mittel zum Bestimmen (311) eines oder mehrerer Szenenwechsel in dem vorher aufgezeichneten Anteil der Live-Videodaten; und
Mittel zum Bestimmen des einen oder der mehreren Einzelbildrahmen, wenigstens teilweise auf dem einen oder den mehreren Szenenwechseln basierend.

5. Vorrichtung gemäß einem der Ansprüche 2 - 4, wobei die Vorrichtung ferner umfasst: Mittel zum Empfangen (315) einer Eingabe zur Auswahl von wenigstens einem oder mehreren Einzelbildrahmen;
und
Mittel zum Veranlassen (317) eines wenigstens teilweisen Austausches eines Teils der Live-Videodaten, die mit wenigstens einem des einen oder der mehreren Einzelbildrahmen verbunden sind.

6. Vorrichtung gemäß einem der Ansprüche 2 - 5, wobei die Vorrichtung ferner umfasst:
Mittel zum Verarbeiten (319) des vorher aufgezeichneten Anteils der Live-Videodaten, der gleichzeitig aufgezeichneten Audiodaten oder einer Kombination daraus zur Bestimmung eines oder mehrerer Audioabschnitte auf der Grundlage von wenigstens teilweise einem oder mehreren Audioauswahlkriterien,
wobei die Audiodaten wenigstens teilweise das eine oder die mehreren Audiosegmente umfassen.

7. Vorrichtung gemäß Anspruch 1, wobei die Vorrichtung ferner Mittel zum Extrahieren der multimodalen Informationen umfasst, während die Live-Videodaten in Reaktion auf die Anforderungen zur Kommunikation der Live-Videodaten aufgenommen werden.

8. Vorrichtung gemäß Anspruch 1, wobei die Vorrichtung ein Mobiltelefon ist, ferner umfassend:
Mittel zur Erleichterung der Benutzersteuerung wenigstens einiger Funktionen des Mobiltelefons durch die Verwendung einer Anzeige und Konfiguration zur Reaktion auf eine Benutzereingabe; und
Mittel zum Anzeigen wenigstens eines Teils einer Benutzerschnittstelle des Mobiltelefons, wobei die Anzeige und die Anzeigenbeschaltung zur Erleichterung der Benutzersteuerung wenigstens einiger Funktionen des Mobiltelefons ausgelegt sind.

9. Verfahren, umfassend:
Empfangen (301) einer Anforderung zur Übermittlung von Live-Videodaten zwischen einem Gerät (503) und einem oder mehreren anderen Geräten (507), wobei die Videodaten Audio-Informationen umfassen;
Bestimmen (303) von Fähigkeitsinformationen, Ressourcenverfügbarkeitsinformationen oder einer Kombination daraus für das Gerät, für das eine oder die mehreren anderen Geräte oder für eine Kombination daraus;
Verarbeiten (305) der Fähigkeitsinformationen, der Ressourcenverfügbarkeitsinformationen oder einer Kombination daraus zur Bestimmung einer oder mehrerer erster verfügbarer multimodaler Betriebsarten, die einer oder mehreren multimodalen Betriebsarten in der Gruppe entsprechen, Folgendes umfassend: einen Einzelbildmodus; einen Audiomodus; einen Hybridmodus von Einzelbildrahmen und Audio; einen Textmodus; einen Key-Video-Segmentmodus; einen Avatar-Modus, wobei die im Avatar-Modus aufgenommenen Personen oder Objekte in ein Cartoon-Profil transformiert werden; und zum Extrahieren multimodaler Informationen, die mit der einen oder den mehreren ersten verfügbaren multimodalen Betriebsarten verbunden sind, aus den Live-Videodaten;
Veranlassen eines wenigstens teilweisen Austauschs (307) der vorhandenen multimodalen Informationen von wenigstens einem Teil der Live-Videodaten, die mit den multimodalen Informationen verbunden sind, in Reaktion auf die Anforderung in einer Kommunikationssitzung; und
Bestimmen einer oder mehrerer zweiter verfügbarer multimodaler Betriebsarten, die einer oder mehreren multimodalen Betriebsarten in der Gruppe entsprechen, die sich wenigstens von einer der einen oder mehreren ersten verfügbaren multimodalen Betriebsarten unterscheidet, zum Extrahieren und Austauschen von zweiten multimodalen Informationen, die mit der einen oder den mehreren zweiten verfügbaren multimodalen Betriebsarten verbunden sind, in Abhängigkeit der ausgetauschten Fähigkeitsinformationen, Ressourcenverfügbarkeitsinformationen oder einer Kombination daraus für das Gerät, das eine oder die mehreren anderen Geräte oder einer Kombination daraus während der Kommunikationssitzung.

10. Verfahren gemäß Anspruch 9, wobei die multimodalen Informationen wenigstens teilweise einen oder mehrere Einzelbildrahmen, Audiodaten, niedrigauflösende Videodaten, Sprache-zu-Text-Daten oder eine Kombination daraus enthalten.

11. Verfahren gemäß Anspruch 10, ferner umfassend:
Verarbeiten (313) eines vorher aufgezeichneten Anteils der Live-Videodaten zum Bestimmen des einen oder der mehreren Einzelbildrahmen.

12. Verfahren gemäß 10 - 11, ferner umfassend:
Empfangen (315) einer Eingabe zum Auswählen von wenigstens einem des einen oder der mehreren Einzelbildrahmen; und Veranlassen (317) eines wenigstens teilweisen Austausches eines Teils der Live-Videodaten, die mit wenigstens einem des einen oder der mehreren Einzelbildrahmen verbunden sind.

13. Verfahren gemäß einem der Ansprüche 10 - 12, ferner umfassend:
Verarbeiten (319) des vorher aufgezeichneten Anteils der Live-Videodaten, der gleichzeitig aufgezeichneten Audiodaten oder einer Kombination daraus zur Bestimmung eines oder mehrerer Audioabschnitte auf der Grundlage von wenigstens teilweise einem oder mehreren Audioauswahlkriterien,
wobei die Audiodaten wenigstens teilweise den einen oder die mehreren Audiosegmente umfassen.

14. Computer-Programmprodukt, eine oder mehrere Sequenzen einer oder mehrerer Anweisungen enthaltend, die, wenn sie von einem oder mehreren Prozessoren (803) ausgeführt werden, eine Vorrichtung veranlassen, wenigstens die Schritte eines Verfahrens gemäß einem der Ansprüche 9 - 13 auszuführen.

## Revendications

1. Appareil (800) comprenant :
des moyens pour recevoir (301) une requête pour communiquer des données de vidéo en direct entre un dispositif (503) et un ou plusieurs autre(s) dispositif(s) (507), où les données de vidéo comprennent des informations audio ;
des moyens pour déterminer (303) les informations de capacité, les informations de disponibilité de ressources, ou une de leurs combinaisons ;
des moyens pour traiter (305) les informations de capacité, les informations de disponibilité de ressources ou une de leurs combinaisons pour déterminer un ou plusieurs premier(s) mode(s) multimodal/multimodaux disponible(s), correspondant à un ou à plusieurs mode(s) multimodal/multimodaux dans le groupe comprenant : un mode image clé ; un mode audio ; un mode hybride d'images clés et d'audio ; un mode parole-texte ; un mode segment vidéo clé ; un mode avatar dans lequel les personnes ou les objets capturé(e)s sont transformé(e)s en un profil de dessin animé, et pour extraire les informations multimodales associées avec les un ou plusieurs modes multimodaux disponibles des données de vidéo en direct ;
des moyens pour provoquer, au moins en partie, un échange (307) des informations multimodales en place d'au moins une partie des données de vidéo en direct associées avec les informations multimodales en réponse à la requête, dans une session de communication ; et
des moyens pour déterminer un ou plusieurs second(s) mode(s) multimodal/multimodaux disponible(s) correspondant à un ou à plusieurs mode(s) multimodal/multimodaux dans le groupe, différents d'au moins d'un ou de plusieurs premier(s) mode(s) multimodal/multimodaux disponible(s), et pour l'extraction et l'échange des secondes informations multimodales associées avec les un ou plusieurs seconds modes multimodaux disponibles, dépendant des informations de capacité changées, des informations de disponibilité de ressources ou d'une de leurs combinaisons du dispositif, des un ou plusieurs autres dispositifs ou d'une de leurs combinaisons, durant la session de communication.

2. Appareil selon la revendication 1, dans lequel les informations multimodales comprennent, au moins en partie, une ou plusieurs image(s) clé(s), donnée(s) audio, donnée(s) de vidéo à résolution réduite, donnée(s) parole-texte ou une de leurs combinaisons associées avec les un ou plusieurs premiers modes multimodaux disponibles.

3. Appareil selon la revendication 2, dans lequel l'appareil comprend en outre des moyens pour traiter (313) une partie préalablement enregistrée des données de vidéo en direct pour déterminer les une ou plusieurs images clés.

4. Appareil selon la revendication 3, dans lequel l'appareil comprend en outre :
des moyens pour déterminer (311) un ou plusieurs changement(s) de scène dans la partie préalablement enregistrée des données de vidéo en direct ; et
des moyens pour déterminer les une ou plusieurs images clés basées, au moins en partie, sur les un ou plusieurs changements de scène.

5. Appareil selon l'une quelconque des revendications 2 à 4, dans lequel l'appareil comprend en outre :
des moyens pour recevoir (315) une entrée pour sélectionner au moins une des une ou plusieurs images clés ;
et
des moyens pour provoquer (317), au moins en partie, un échange d'une partie des données de vidéo en direct associée avec au moins une des une ou plusieurs images clés.

6. Appareil selon l'une quelconque des revendications 2 à 5, dans lequel l'appareil comprend en outre :
des moyens pour traiter (319) la partie préalablement enregistrée des données de vidéo en direct,
simultanément des données audio enregistrées, ou d'une de leurs combinaisons pour déterminer un ou plusieurs segment(s) audio basé(s), au moins en partie, sur un ou plusieurs critère(s) de sélection audio, où les données audio comprennent au moins en partie les un ou plusieurs segments audio.

7. Appareil selon la revendication 1, dans lequel l'appareil comprend en outre des moyens pour extraire les informations multimodales pendant que les données de vidéo en direct sont tournées en réponse à la requête pour communiquer les données de vidéo en direct.

8. Appareil selon la revendication 1, dans lequel l'appareil est un téléphone portable comprenant en outre :
des moyens pour faciliter le contrôle par l'utilisateur d'au moins certaines fonctions du téléphone portable par l'usage d'un affichage et configurés pour répondre à une entrée de l'utilisateur ; et
des moyens pour afficher au moins une partie de l'interface d'un utilisateur du téléphone portable, l'affichage et la circuiterie d'affichage configurés pour faciliter le contrôle par l'utilisateur d'au moins certaines fonctions du téléphone portable.

9. Procédé comprenant :
la réception (301) d'une requête pour communiquer des données de vidéo en direct entre un dispositif (503) et un ou plusieurs autre(s) dispositif(s) (507), où les données de vidéo comprennent des informations audio ;
la détermination (303) des informations de capacité, des informations de disponibilité de ressources ou d'une de leurs combinaisons ;
le traitement (305) des informations de capacité, des informations de disponibilité de ressources ou d'une de leurs combinaisons pour déterminer un ou plusieurs premier(s) mode(s) multimodal/multimodaux disponible(s), correspondant à un ou à plusieurs mode(s) multimodal/multimodaux dans le groupe comprenant : un mode image clé ; un mode audio ; un mode hybride d'images clés et d'audio ; un mode texte ; un mode segment de vidéo clé ; un mode avatar, dans lequel les personnes ou les objets capturé(e)s sont transformé(e)s en un profil de dessin animé, et pour extraire les informations multimodales associées avec les un ou plusieurs premiers modes multimodaux disponibles des données de vidéo en direct ; et
provoquer, au moins en partie, un échange (307) des informations multimodales en place d'au moins une partie des données de vidéo en direct associées avec les informations multimodales en réponse à la requête, dans une session de communication ; et
déterminer un ou plusieurs second(s) mode(s) multimodal/multimodaux disponible(s) correspondant à un ou à plusieurs mode(s) multimodal/multimodaux dans le groupe, différent(s) d'au moins d'un des un ou de plusieurs premiers modes multimodaux disponibles, pour l'extraction et l'échange des secondes informations multimodales associées avec les un ou plusieurs seconds modes multimodaux disponibles, dépendant des informations de capacité changées, des informations de disponibilité de ressources ou d'une de leurs combinaisons du dispositif, des un ou de plusieurs autres dispositifs ou d'une de leurs combinaisons, durant la session de communication.

10. Procédé selon la revendication 9, dans lequel les informations multimodales comprennent, au moins en partie, une ou plusieurs image(s) clé(s), donnée(s) audio, donnée(s) de vidéo à résolution réduite, donnée(s) parole-texte ou une de leurs combinaisons.

11. Procédé selon la revendication 10, comprenant en outre :
le traitement (313) d'une partie préalablement enregistrée des données de vidéo en direct pour déterminer les une ou plusieurs images clés.

12. Procédé selon l'une quelconque des revendications 10 à 11, comprenant en outre :
la réception (315) d'une entrée pour sélectionner au moins une des une ou plusieurs images clés ; et
provoquer (317), au moins en partie, un échange d'une partie des données de vidéo en direct associées avec la au moins une des une ou plusieurs images clés.

13. Procédé selon l'une quelconque des revendications 10 à 12, comprenant en outre :
le traitement (319) de la partie préalablement enregistrée des données de vidéo en direct, simultanément des données audio enregistrées ou d'une de leurs combinaisons pour déterminer un ou plusieurs segment(s) audio basé(s), au moins en partie, sur un ou plusieurs critère(s) de sélection audio,
où les données audio comprennent au moins en partie les un ou plusieurs segments audio.

14. Produit de programme informatique comprenant une ou plusieurs séquence(s) d'une ou de plusieurs instruction(s) qui, quand elle(s) est/sont exécutée(s) par un ou plusieurs processeur(s) (803), entraîne(nt) un appareil à effectuer au moins les étapes d'un procédé selon l'une quelconque des revendications 9 à 13.
